# EUROPEAN PATENT APPLICATION

(11) **EP 4 618 178 A1**
(43) Date of publication of application: **17.09.2025**
(21) Application number: 23907625.0
(22) Date of filing: 15.12.2023
(51) Int. Cl.: H01M 4/131, H01M 4/525, H01M 4/505, H01M 10/052, H01M 10/44, H01M 4/02

(54) **LITHIUM SECONDARY BATTERY AND URBAN AIR MOBILITY COMPRISING SAME**

(30) Priority: 19.12.2022 KR 20220178732; 13.12.2023 KR 20230180945
(71) Applicant: LG Energy Solution, Ltd., Seoul 07335 (KR)
(72) Inventor: MOK, Eun Kyung, Daejeon 34122 (KR)
(74) Representative: Plasseraud IP
(86) International application number: PCT/KR2023/020786
(87) International publication number: WO 2024/136339

(57) **Abstract**

The present invention relates a lithium secondary battery and urban air mobility including the lithium secondary battery, wherein the lithium secondary battery includes a positive electrode including a positive electrode current collector and a positive electrode active material layer formed on at least one surface of the positive electrode current collector, and having a loading amount of 2.5 mAh/cm² to 3.8 mAh/cm², a negative electrode including a negative electrode current collector and a negative electrode active material layer formed on at least one surface of the negative electrode current collector, and a separator interposed between the positive electrode and the negative electrode, wherein the lithium secondary battery takes 10 seconds or more to reach SOC 0% when discharged for 15 seconds under a 900W constant output condition at SOC 35% and then discharged under a 1,000W constant output condition.

## Description

### TECHNICAL FIELD

This application claims the benefit of Korean Patent Application Nos. 10-2022-0178732, filed on December 19, 2022, and 10-2023-0180945, filed on December 13, 2023, in the Korean Intellectual Property Office, the disclosures of which are incorporated herein in their entirety.

The present invention relates to a lithium secondary battery and urban air mobility including the same, and specifically, to a secondary battery capable of producing a high output for a predetermined period of time or more in a state in which the remaining capacity is low, and urban air mobility including the secondary battery, thereby having improved safety in an emergency situation.

### BACKGROUND ART

With the development of technology, the demand for lithium secondary batteries as an energy source is rapidly increasing. Recently, the demand for lithium secondary batteries as a power source of urban air mobility (UAM), which is a next-generation transportation mode, beyond electric vehicles, portable electronic devices, and the like is also increasing.

Since the UAM needs to provide air services in a complex urban environment, it should be designed to enable vertical take-off and landing to minimize an operating space, and in order to increase social acceptance for commercialization, high safety is also required.

Particularly, since there are many complex variables in the operation of the UAM, such as collisions with high-rise buildings and structures, lower-level turbulence, weather changes such as precipitation, and the like, the lithium secondary batteries, which is the power source, should also be designed in preparation for an emergency situation deviating from a normal flight situation.

However, since research on lithium secondary batteries so far has been mainly conducted for electric vehicle applications, performance required in the UAM, specifically, an output condition in consideration of landing in an emergency situation is not satisfied, and therefore, there is a need for the technology development for lithium secondary batteries for the UAM.

### DISCLOSURE OF THE INVENTION

### TECHNICAL PROBLEM

The present invention is to provide a lithium secondary battery capable of producing a high output for a predetermined time or more in a state in which the remaining capacity is low.

In addition, the present invention is to provide urban air mobility including the lithium secondary battery, thereby having improved safety in an emergency situation.

### TECHNICAL SOLUTION

According to an aspect of the present invention, there is provided a lithium secondary battery including a positive electrode including a positive electrode current collector and a positive electrode active material layer formed on at least one surface of the positive electrode current collector, and having a loading amount of 2.5 mAh/cm² to 3.8 mAh/cm²,a negative electrode including a negative electrode current collector and a negative electrode active material layer formed on at least one surface of the negative electrode current collector, and a separator interposed between the positive electrode and the negative electrode, wherein the lithium secondary battery takes 10 seconds or more to reach SOC 0% when discharged for 15 seconds under a 900W constant output condition at SOC 35% and then discharged under a 1,000W constant output condition.

In addition, the present invention provides urban air mobility including the lithium secondary battery.

### ADVANTAGEOUS EFFECTS

A lithium secondary battery according to the present invention includes a positive electrode having a loading amount adjusted to a predetermined range, and thus, exhibits high-output properties even at a lower end of SOC. Therefore, urban air mobility including the lithium secondary battery has the advantage of being able to land stably even in emergency situations.

### BRIEF DESCRIPTION OF THE DRAWINGS

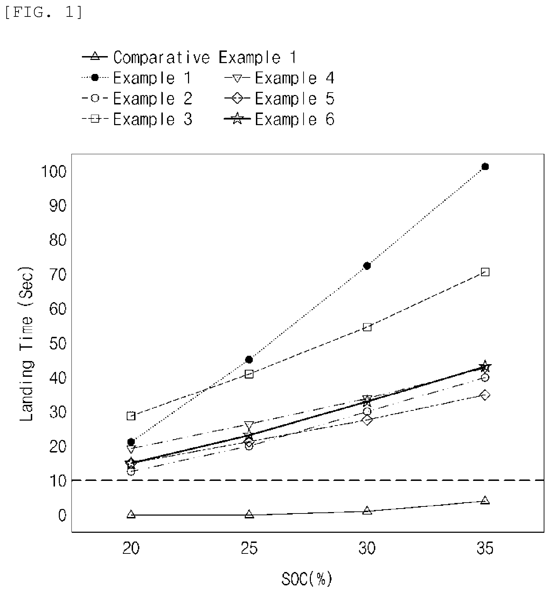

FIG. 1 is a diagram showing output evaluation results at a lower end of SOC for lithium secondary batteries manufactured in Examples and Comparative Examples of the present invention.

### BEST MDOE FOR CARRYING OUT THE INVENTION

Hereinafter, the present invention will be described in more detail.

Urban air mobility (UAM) is operated in vertical take-off and landing, so it requires a high level of output during take-off and landing. Particularly, due to its complex operating environments, it is absolutely necessary for the urban air mobility to have a function of producing a high output for a predetermined period of time even at a low state of charge (SOC) such that the urban air mobility can land safely even in a situation in which some of batteries do not function properly. However, typical secondary batteries for electric vehicles are not required to have the above-described function, and thus, when applied to UAM as they are, there is a problem in that it is difficult to secure safety.

Therefore, the present invention is to provide a secondary battery that produces a high output of 1,000W or greater for a predetermined period of time or more even in sections with a low SOC.

Specifically, a lithium secondary battery according to the present invention includes a positive electrode including a positive electrode current collector and a positive electrode active material layer formed on at least one surface of the positive electrode current collector, and having a loading amount of 2.5 mAh/cm² to 3.8 mAh/cm²,a negative electrode including a negative electrode current collector and a negative electrode active material layer formed on at least one surface of the negative electrode current collector, and a separator interposed between the positive electrode and the negative electrode, wherein the lithium secondary battery takes 10 seconds or more to reach SOC 0% when discharged for 15 seconds under a 900W constant output condition at SOC 35% and then discharged under a 1,000W constant output condition.

Meanwhile, in the present invention, a "primary particle" refers to a particle unit in which grain boundaries do not exist in appearance when observed in a range of vision of 5,000 times to 20,000 times using a scanning electron microscope, and a "secondary particle" refers to a particle formed by the aggregation of a plurality of primary particles.

In the present invention, an "average particle diameter of primary particles" refers to an arithmetic mean value calculated after measuring particle diameters of at least 20 primary particles observed in a scanning electron microscope image. At this time, the particle diameter refers to the diameter of the longest axis of a primary particle.

In the present invention, the term "secondary particle" is a particle formed by the aggregation of a plurality of primary particles. In the present invention, a secondary particle in which 30 or fewer primary particles are aggregated will be referred to as a pseudo-single particle in order to distinguish the same from a typical secondary particle formed by the aggregation of tens to hundreds of primary particles.

In the present invention, a "D50" refers to a particle diameter corresponding to a cumulative volume of 50% in a volume cumulative particle size distribution of the corresponding particle powder. For example, the D50 may be measured by dispersing positive electrode active material powder in a dispersion medium, and then introducing the mixture into a commercially available laser diffraction particle size measurement device (e.g., Microtrac Co. S-3500) to be irradiated with an ultrasonic wave of about 28 kHz to an output of 60W, thereby obtaining a volume cumulative particle size distribution graph, and then obtaining a particle diameter at a point at which the cumulative volume is 50% in the obtained volume cumulative particle size distribution graph.

In the present invention, an "energy density of a positive electrode" may be measured by manufacturing an electrode assembly by interposing a 15µm-thick polyethylene-based separator between the corresponding positive electrode and a lithium metal negative electrode, followed by placing the electrode assembly inside a battery case, and then injecting, into the case, an electrolyte solution prepared by dissolving LiPF₆ of 1 M concentration in a mixed organic solvent in which ethylenecarbonate and ethylmethylcarbonate are mixed in a volume ratio of 3:7 to manufacture a coin half-cell. Specifically, the coin half-cell is charged to 4.25 V under a 0.33 C constant current/constant voltage condition at 25 °C and then discharged to 3.0 V at 0.33 C constant current to obtain an initial discharge capacity (Ah) of the secondary battery, and the initial discharge capacity is multiplied by an average discharge voltage, and then divided by the weight (kg) of the coin half-cell to obtain a value, which is described as an energy density of a positive electrode.

Hereinafter, each component constituting the present invention will be described in detail.

### Positive electrode

The lithium secondary battery according to the present invention includes a positive electrode having a loading amount of 2.5 mAh/cm² to 3.8 mAh/cm², preferably 3.0 mAh/cm² to 3.6 mAh/cm², and more preferably 3.3 mAh/cm² to 3.5 mAh/cm².

When the loading amount satisfies the above range, the lithium secondary battery may produce an output of 1,000 W or greater for 10 seconds or more after being discharged for 15 seconds under a 900 W constant output condition at SOC 35%. In order to implement a minimum energy density that can be used for UAM, the loading amount of the positive electrode should be 2.5 mAh/cm² or greater, and in order to implement minimum output properties required to be applied to the UAM, the loading amount should not exceed 3.8 mAh/cm².

The positive electrode active material layer may include a positive electrode active material with a bimodal particle size distribution composed of large particles and small particles having different D50s from each other, wherein the large particles and the small particles each independently include a lithium nickel-based oxide, or may include a positive electrode active material with a monomodal particle size distribution, wherein the positive electrode active material with the monomodal particle size distribution includes a lithium nickel-based oxide in the form of a single particle composed of one primary particle or in the form of a pseudo-single particle which is a secondary particle in which 30 or fewer primary particles are aggregated.

In one embodiment of the present invention, the positive electrode active material layer includes a positive electrode active material with a bimodal particle size distribution composed of large particles and small particles having different D50s from each other, wherein the large particles and the small particles each independently include a lithium nickel-based oxide.

In this case, when an electrode is roll-pressed, small particles are filled in pores of large particles, so that there is an advantage in that an energy density may be increased and a high energy density may be implemented.

The large particles may have a D50 of 8 µm to 18 µm, preferably 8 µm to 15 µm, and more preferably 9 µm to 13 µm. In addition, the small particles may have a D50 of 2 µm to 7 µm, preferably 2 µm to 6 µm, and more preferably 3 µm to 5 µm. When the D50 of the large particles and the D50 of the small particles satisfy the above-described ranges, it is advantageous in implementing a high energy density.

Meanwhile, the large particles and the small particles may each independently be a single particle composed of one primary particle, a pseudo-single particle which is a secondary particle in which 30 or fewer primary particles are aggregated, a secondary particle in which more than 30 primary particles are aggregated, or a combination thereof.

However, preferably, the small particles may include a lithium nickel-based oxide in the form of a single particle composed of one primary particle or in the form of a pseudo-single particle which is a secondary particle in which 30 or fewer primary particles are aggregated.

When large particles and small particles are mixed to form an electrode, the small particles positioned between the large particles serve to alleviate the direct contact between the large particles, so that the small particles are subjected to relatively more physical force (stress), which may intensify particle breakage. Therefore, when the small particles are introduced in the form of a single particle or a pseudo-single particle as described above, breakage and deterioration of the small particles may be suppressed, and roll-pressing properties of the electrode may be improved.

Meanwhile, the positive electrode active material with the bimodal particle size distribution may include the large particles and the small particles in a weight ratio of 50 : 50 to 90 : 10, preferably 60 : 40 to 80 : 20. When the weight ratio of the large particles and the small particles is in the above-described range, the small particles may be disposed between the large particles while minimizing space loss. Accordingly, the packing density is optimized, and the stress applied between the active materials during roll-pressing is more smoothly distributed, so that it is advantageous in improving electrode roll-pressing properties and implementing high energy.

In another embodiment of the present invention, the positive electrode active material layer includes a positive electrode active material with a monomodal particle size distribution, wherein the positive electrode active material with the monomodal particle size distribution includes a lithium nickel-based oxide in the form of a single particle composed of one primary particle or in the form of a pseudo-single particle which is a secondary particle in which 30 or fewer primary particles are aggregated. In this case, it is advantageous for one particle to quickly participate in a reaction and implement a high output.

Meanwhile, in the lithium nickel-based oxide in the form of a single particle or pseudo-single particle, the average particle diameter of the primary particles may be 1 µm to 5 µm, preferably 2 µm to 4 µm.

In addition, the lithium nickel-based oxide includes nickel, cobalt, and manganese, and specifically, the molar ratio of nickel among transition metals may be 70 mol% or greater, preferably 75 mol% or greater, and more preferably 80 mol% or greater. In the case of the positive electrode active material with the bimodal particle size distribution, compositions of lithium nickel-based oxides included in the large particles and the small particles are the same as or different from each other.

More specifically, the lithium nickel-based oxide may be represented by Formula 1 below.

[Formula 1] Li₁₊ₓ(NiₐCo_{b}Mn_{c}M_{d})O₂

In Formula 1 above, M is any one or more selected from the group consisting of W, Cu, Fe, V, Cr, Ti, Zr, Zn, Al, In, Ta, Y, La, Sr, Ga, Sc, Gd, Sm, Ca, Ce, Nb, Mg, B, Mo, and

1+x, a, b, c, and d are each an atomic fraction of an independent element, wherein -0.2≤x≤0.2, 0.60≤a<1, 0<b<0.40, 0<c<0.40, 0≤d≤0.10, and a+b+c+d=1.

The 1+x represents the molar ratio of lithium in the lithium nickel-based oxide, wherein it may be that -0.1≤x≤0.2, or 0≤x≤0.2. When the molar ratio of lithium satisfies the above-described range, the crystal structure of the lithium nickel-based oxide may be stably formed.

The a represents the molar ratio of nickel among all metals except for lithium in the lithium nickel-based oxide, wherein it may be that 0.70≤a<1, 0.75≤a<1, or 0.80≤a<1. When the molar ratio of nickel satisfies the above-described range, high energy density may be achieved to implement high capacity.

The b represents the molar ratio of cobalt among all metals except for lithium in the lithium nickel-based oxide, wherein it may be that 0<b≤0.25, 0<b≤0.20, or 0<b≤0.15. When the molar ratio of cobalt satisfies the above-described range, good resistance properties and output properties may be implemented.

The c represents the molar ratio of manganese in all metals except for lithium in the lithium nickel-based oxide, wherein it may be that 0<c≤0.25, 0<c≤0.20, or 0<c≤0.15. When the molar ratio of manganese satisfies the above-described range, the positive electrode active material exhibits excellent structural stability.

The d represents the molar ratio of an M element in all metals except for lithium in the lithium nickel-based oxide, wherein it may be that 0≤d≤0.08, 0≤d≤0.05, or 0≤d≤0.03.

Meanwhile, the lithium nickel-based oxide according to the present invention may further include, if necessary, a coating layer on a particle surface. At this time, the coating layer may include, for example, one or more coating elements selected from the group consisting of Al, Ti, W, B, F, P, Mg, Ni, Co, Fe, Cr, V, Cu, Ca, Zn, Zr, Nb, Mn, Sr, Sb, Bi, Si, and S. When there is a coating layer present on the surface of the lithium nickel-based oxide, the contact between an electrolyte and the lithium nickel-based oxide is reduced by the coating layer, and accordingly, there is an effect of reducing transition metal elution or gas generation due to side reactions with the electrolyte. Preferably, the coating layer may contain B, Co, Al, or a combination thereof, and more preferably, may contain Co. If the coating layer contains Co, it is possible to obtain an effect of suppressing side reactions with an electrolyte solution, as well as an effect of improving an output and reducing resistance.

The positive electrode according to the present invention includes a positive electrode current collector, and a positive electrode active material layer formed at least one surface of the positive electrode current collector. Specifically, the positive electrode active material layer includes the above-described positive electrode active material.

The positive electrode current collector may include a highly conductive metal, and is not particularly limited as long as it is not reactive in a voltage range of a battery while a positive electrode active material layer is able to be easily adhered to the positive electrode current collector. As the positive electrode current collector, for example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 µm to 500 µm, and microscopic irregularities may be formed on the surface of the current collector to improve the adhesion of the positive electrode active material. For example, the positive electrode current collector may be used in various forms such as a film, a sheet, a foil, a net, a porous body, a foam, and a non-woven body.

The positive electrode active material layer may selectively include, if necessary, a conductive material and a binder together with the positive electrode active material.

At this time, the positive electrode active material may be included in an amount of 80 wt% to 99 wt%, more specifically 85 wt% to 98.5 wt%, based on the total weight of the positive electrode active material layer. When included in the above-described content range, excellent capacity properties may be exhibited.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; carbon black such as acetylene black, Ketjen black, channel black, furnace black, lamp black and thermal black; a carbon-based material such as carbon fiber; metal powder or metal fiber of such as copper, nickel, aluminum and silver; a conductive tube such as a carbon nanotube; a conductive whisker such as zinc oxide and potassium titanate; a conductive metal oxide such as a titanium oxide; or a conductive polymer such as a polyphenylene derivative, and any one thereof or a mixture of two or more thereof may be used. The conductive material may be included in an amount of 0.1 wt% to 15 wt% based on the total weight of the positive electrode active material layer.

The binder serves to improve the bonding between positive electrode active material particles and the adhesion between the positive electrode active material and the current collector. Specific examples thereof may include polyvinylidenefluoride (PVDF), a polyvinylidenefluoride-hexafluoropropylene copolymer (PVDF-co-HFP), polyvinylalcohol, polyacrylonitrile, polymethylmethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, styrenebutadiene rubber (SBR), fluorine rubber, a poly acrylic acid, a polymer having the hydrogen thereof substituted with Li, Na, or Ca, or various copolymers thereof, and any one thereof or a mixture of two or more thereof may be used. The binder may be included in an amount of 0.1 wt% to 15 wt% based on the total weight of the positive electrode active material layer.

The positive electrode may be manufactured according to a typical method for manufacturing a positive electrode, except that the loading amount is adjusted to the above-described range. For example, the positive electrode may be manufactured by applying a positive electrode mixture, which is prepared by dissolving or dispersing the positive electrode active material described above, and selectively, if necessary, a binder, a conductive material, and a dispersant in a solvent, on a positive electrode current collector, followed by drying and roll-pressing, or manufactured by casting the positive electrode mixture on a separate support, and then laminating a film peeled off from the support on the positive electrode current collector.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent dissolves or disperses the positive electrode active material, the conductive material, the binder, and the dispersant in consideration of the coating thickness of a slurry, and a manufacturing yield, and thereafter, allows the slurry to have a viscosity capable of exhibiting excellent thickness uniformity when applied for manufacturing the positive electrode.

In one embodiment of the present invention, the energy density of the positive electrode may be 250 Wh/kg or greater, preferably 270 Wh/kg or greater, and more preferably 280 Wh/kg or greater. The higher the energy density of a positive electrode, the higher the energy may be exhibited with the smaller weight, which is desirable, but considering the fact that the higher the loading of a positive electrode for the implementation of a high energy density, the more difficult it is to meet output conditions, and that there is a limit to the proportion that a battery can occupy in the weight of an aircraft, the energy density of a positive electrode may be 320 Wh/kg or less.

In one embodiment of the present invention, the positive electrode active material layer may have a porosity of 20% to 32%, preferably 21% to 28%, and more preferably 22% to 26%. When the porosity of the positive electrode active material layer is in the above-described range, it is preferable in that particle breakage of the active material is minimized, and at the same time, packing density is increased, which may contribute to increasing the energy density of a battery. Here, the porosity refers to a value calculated by [Equation 1] below. Porosity of positive electrode active material layer(%) = ((true density of positive electrode active material - electrode density)/true density of positive electrode active material) × 100

In Equation 1 above, the electrode density is a value calculated by Equation 2 below. Electrode density = (weight of positive electrode - weight of positive electrode current collector)/(a×b×c)

In Equation 2 above, a, b, and c are respectively the width, length, and height measured after separating a positive electrode current collector from a positive electrode.

### Negative electrode

In the above-described lithium secondary battery, the negative electrode includes a negative electrode current collector and a negative electrode active material layer formed on at least one surface of the negative electrode current collector.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3 µm to 500 µm, and as in the case of the positive electrode current collector, microscopic irregularities may be formed on the surface of the current collector to improve the adhesion of a negative electrode active material. For example, the negative electrode current collector may be used in various forms such as a film, a sheet, a foil, a net, a porous body, a foam, and a non-woven body.

The negative electrode active material layer selectively includes a binder and a conductive material together with a negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic material alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiOβ(0<β< 2), SnO₂, a vanadium oxide, and a lithium vanadium oxide; or a composite including the metallic material and the carbonaceous material such as an Si-C composite or an Sn-C composite, and any one thereof or a mixture of two or more thereof may be used. Also, a metal lithium thin film may be used as the negative electrode active material. The negative electrode active material may be included in an amount of 80 wt% to 99 wt% based on the total weight of the negative electrode active material layer.

The binder is a component for assisting in bonding between a conductive material, an active material, and a current collector, and is typically added in an amount of 0.1 wt% to 10 wt% based on the total weight of a negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, styrene-butadiene rubber, nitrile-butadiene rubber, fluorine rubber, various copolymers thereof, and the like.

The conductive material is a component for further improving the conductivity of the negative electrode active material, and may be added in an amount of 10 wt% or less, preferably 5 wt% or less, based on the total weight of the negative electrode active material layer. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; conductive fiber such as carbon fiber and metal fiber; fluorinated carbon; metal powder such as aluminum powder and nickel powder; a conductive whisker such as zinc oxide and potassium titanate; a conductive metal oxide such as titanium oxide; and a conductive material such as a polyphenylene derivative, or the like may be used.

The negative electrode active material layer may be prepared by applying a negative electrode mixture, which is prepared by dissolving or dispersing a negative electrode active material, and selectively, a binder, and a conductive material in a solvent, on a negative electrode current collector, followed by drying and roll-pressing, or prepared by casting the negative electrode mixture on a separate support, and then laminating a film peeled off from the support on the negative electrode current collector.

### Separator

In the lithium secondary battery of the present invention, the separator is to separate the negative electrode and the positive electrode and to provide a movement path for lithium ions, and any separator may be used without particular limitation as long as it is commonly used as a separator in a lithium secondary battery, and particularly, a separator having excellent moisture-retention capability for an electrolyte solution while having low resistance to ion movement in an electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structure having two or more layers thereof may be used. Also, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may selectively be used in a single-layered or multi-layered structure.

### Electrolyte

The lithium secondary battery of the present invention may include, as the electrolyte, an organic liquid electrolyte, an inorganic liquid electrolyte, a solid polymer electrolyte, a gel-type polymer electrolyte, a solid inorganic electrolyte, or a molten-type inorganic electrolyte, and preferably, may include, as the organic liquid electrolyte, an electrolyte including an organic solvent and a lithium salt.

As the organic solvent, any organic solvent may be used without particular limitation as long as it can serve as a medium through which ions involved in an electrochemical reaction of a battery may move. Specifically, as the organic solvent, an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC); an alcohol-based solvent such as ethyl alcohol or isopropyl alcohol; nitriles such as R-CN (wherein R is a linear, branched, or cyclic hydrocarbon group having 2 to 20 carbon atoms, and may include a double-bond aromatic ring or an ether bond); amides such as dimethylformamide; dioxolanes such as 1,3-dioxolane; sulfolanes, or the like may be used. Among the above, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

As the lithium salt, any compound may be used without particular limitation as long as it can provide lithium ions used in a lithium secondary battery. Specifically, anions of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, LiPF₆, LiClO₄, LiAsF₆, LiBF₄, LiSbF₆, LiAlO₂, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. It is preferable that the lithium salt is used in a concentration range of 0.1 M to 4.0 M. If the concentration of the lithium salt is included in the above-described range, the electrolyte has suitable conductivity and viscosity, and thus, may exhibit excellent electrolyte performance, and lithium ions may effectively move.

In order to improve lifespan properties of a battery, suppress a decrease in battery capacity, improve discharge capacity of the battery, and the like, the electrolyte may further include, for example, one or more additives such as a haloalkylene carbonate-based compound such as difluoroethylene carbonate, pyridine, triethylphosphite, triethanolamine, cyclic ether, ethylene diamine, n-glyme, hexaphosphate triamide, a nitrobenzene derivative, sulfur, a quinone imine dye, N-substituted oxazolidinone, N,N-substituted imidazolidine, ethylene glycol dialkyl ether, ammonium salt, pyrrole, 2-methoxy ethanol, or aluminum trichloride. At this time, the additive may be included in an amount of 0.1 wt% to 5 wt% based on the total weight of the electrolyte.

### Lithium secondary battery

The lithium secondary battery according to the present invention may take 10 seconds or more, preferably 20 seconds or more, and more preferably 30 seconds or more, to reach SOC 0% when discharged for 15 seconds under a 900W constant output condition at SOC 35% and then discharged under a 1,000W constant output condition.

Specifically, the lithium secondary battery may take 10 seconds or more, preferably 20 seconds or more, and more preferably 30 seconds or more, to reach SOC 0% when discharged for 18 seconds under a 900W constant output condition at SOC 35% and then discharged under a 1,100W constant output condition.

At this time, the upper voltage limit may be 4.2 V, and the lower limit voltage may be 2.5 V, and charging up to the upper voltage limit may be performed under constant current/constant voltage conditions, and discharging up to SOC 35% may be performed under constant output or constant current conditions.

In addition, the lithium secondary battery may be for urban air mobility (UAM). As described above, it is absolutely necessary for the UAM to have a function of producing a high output for a predetermined period of time even at a low SOC such that the UAM can land safely even in a situation in which some of batteries do not function properly. The fact that the lithium secondary battery according to the present invention can be driven for 10 seconds or more with an output of 1,000 W or greater at an SOC of 35% or lower means that it is possible to secure 10 seconds or more of landing time even in a battery out (BO) state in which one of batteries is discharged, and therefore, the lithium secondary battery is suitable to be applied to urban air mobility.

Meanwhile, the discharging up to SOC 35% refers to the period of time during which the UAM cruises and prepares for landing, that is, battery driving in a cruise process before the following transition, the process of discharging for 15 seconds under the 900W constant output condition refers to a transition process of switching to a landing mode after cruising, and then the driving with an output of 1,000 W or greater refers to a landing process. That is, the present invention relates to a lithium secondary battery that satisfies a minimum output condition required for transition and landing processes after cruising of UAM.

Meanwhile, the external shape of the lithium secondary battery is not particularly limited, but may be a cylindrical shape using a can, a square shape, a pouch shape, a coin shape, or the like.

According to another embodiment of the present invention, urban air mobility including the lithium secondary battery is provided. Specifically, the urban air mobility according to the present invention may include a battery module or battery pack including the lithium secondary battery as a unit cell.

Hereinafter, the present invention will be described in more detail with reference to specific examples.

### MDOE FOR CARRYING OUT THE INVENTION

### <Manufacturing example: Manufacturing of positive electrode>

### Manufacturing Example 1.

A lithium composite transition metal oxide having a composition of Li(Ni_{0.86}Co_{0.07}Mn_{0.07}Al_{0.02})O₂ and in the form of secondary particles with D50=10 µm and a lithium composite transition metal oxide having a composition of Li(Ni_{0.86}Co_{0.05}Mn_{0.07}Al_{0.12})O₂ and in the form of secondary particles with D50=5 µm were mixed at a weight ratio of 80: 20 to prepare a bimodal positive electrode material.

The positive electrode material, carbon black as a conductive material, and polyvinylidene fluoride (PVdF) as a binder were mixed in a N-methyl-2-pyrrolidone (NMP) solvent at a weight ratio of 97.6:1.0:1.4 to prepare a positive electrode slurry having a solid content of 50 wt%. The positive electrode slurry was applied on one surface of an aluminum current collector having a thickness of 15 µm according to a loading amount of 2.6 mAh/cm² and dried at 130 °C, and then placed between two roll-pressing rolls, and a gap between the roll-pressing rolls was adjusted at 25 °C to manufacture a positive electrode having a porosity of 31% and an energy density of 256 Wh/kg.

### Manufacturing Example 2.

A lithium composite transition metal oxide having a composition of Li(Ni_{0.86}Co_{0.07}Mn_{0.07}Al_{0.02})O₂ and in the form of secondary particles with D50=10 µm and a lithium composite transition metal oxide having a composition of Li(Ni_{0.86}Co_{0.07}Mn_{0.07}Al_{0.02})O₂ and in which single particles and pseudo-single particles were mixed with D50=3.5 µm were mixed at a weight ratio of 80:20 to prepare a bimodal positive electrode material.

The positive electrode material, carbon black as a conductive material, and polyvinylidene fluoride (PVdF) as a binder were mixed in an NMP solvent at a weight ratio of 97.6:1.0:1.4 to prepare a positive electrode slurry having a solid content of 50 wt%. The positive electrode slurry was applied on one surface of an aluminum current collector having a thickness of 15 µm according to a loading amount of 3.3 mAh/cm² and dried at 130 °C, and then placed between two roll-pressing rolls, and a gap between the roll-pressing rolls was adjusted at 25 °C to manufacture a positive electrode having a porosity of 26% and an energy density of 291 Wh/kg.

### Manufacturing Example 3.

A lithium composite transition metal oxide having a composition of Li(Ni_{0.86}Co_{0.05}Mn_{0.07}Al_{0.02})O₂ and in which single particles and pseudo-single particles were mixed with D50=3.5 µm as a positive electrode material, carbon black as a conductive material, and PVdF as a binder were mixed in an NMP solvent at a weight ratio of 97:1.2:1.8 to prepare a positive electrode slurry having a solid content of 50 wt%. The positive electrode slurry was applied on one surface of an aluminum current collector having a thickness of 15 µm according to a loading amount of 3.0 mAh/cm² and dried at 130 °C, and then placed between two roll-pressing rolls, and a gap between the roll-pressing rolls was adjusted at 25 °C to manufacture a positive electrode having a porosity of 26% and an energy density of 270 Wh/kg.

### Manufacturing Example 4.

A lithium composite transition metal oxide having a composition of Li(Ni_{0.86}Co_{0.05}Mn_{0.07}Al_{0.02})O₂ and in which single particles and pseudo-single particles were mixed with D50=3.5 µm as a positive electrode material, carbon black as a conductive material, and PVdF as a binder were mixed in an NMP solvent at a weight ratio of 97:1.2:1.8 to prepare a positive electrode slurry having a solid content of 50 wt%. The positive electrode slurry was applied on one surface of an aluminum current collector having a thickness of 15 µm according to a loading amount of 3.3 mAh/cm² and dried at 130 °C, and then placed between two roll-pressing rolls, and a gap between the roll-pressing rolls was adjusted at 25 °C to manufacture a positive electrode having a porosity of 26% and an energy density of 280 Wh/kg.

### Manufacturing Example 5.

A lithium composite transition metal oxide having a composition of Li(Ni_{0.86}Co_{0.05}Mn_{0.07}Al_{0.02})O₂ and in which single particles and pseudo-single particles were mixed with D50=3.5 µm as a positive electrode material, carbon black as a conductive material, and PVdF as a binder were mixed in an NMP solvent at a weight ratio of 97:1.2:1.8 to prepare a positive electrode slurry having a solid content of 50 wt%. The positive electrode slurry was applied on one surface of an aluminum current collector having a thickness of 15 µm according to a loading amount of 3.5 mAh/cm² and dried at 130 °C, and then placed between two roll-pressing rolls, and a gap between the roll-pressing rolls was adjusted at 25 °C to manufacture a positive electrode having a porosity of 26% and an energy density of 280 Wh/kg.

### Manufacturing Example 6.

A lithium composite transition metal oxide having a composition of Li(Ni_{0.86}Co_{0.05}Mn_{0.07}Al_{0.02})O₂ and in which single particles and pseudo-single particles were mixed with D50=3.5 µm as a positive electrode material, carbon black as a conductive material, and PVdF as a binder were mixed in an NMP solvent at a weight ratio of 97:1.2:1.8 to prepare a positive electrode slurry having a solid content of 50 wt%. The positive electrode slurry was applied on one surface of an aluminum current collector having a thickness of 15 µm according to a loading amount of 3.3 mAh/cm² and dried at 130 °C, and then placed between two roll-pressing rolls, and a gap between the roll-pressing rolls was adjusted at 25 °C to manufacture a positive electrode having a porosity of 21% and an energy density of 294 Wh/kg.

### Comparative Manufacturing Example 1.

A lithium composite transition metal oxide having a composition of Li(Ni_{0.86}Co_{0.07}Mn_{0.07}Al_{0.02})O₂ and in the form of secondary particles with D50=10 µm and a lithium composite transition metal oxide having a composition of Li(Ni_{0.86}Co_{0.05}Mn_{0.07}Al_{0.02})O₂ and in the form of secondary particles with D50=5 µm were mixed at a weight ratio of 80: 20 to prepare a bimodal positive electrode material.

The positive electrode material, carbon black as a conductive material, and polyvinylidene fluoride (PVdF) as a binder were mixed in an NMP solvent at a weight ratio of 97.6:1.0:1.4 to prepare a positive electrode slurry having a solid content of 50 wt%. The positive electrode slurry was applied on one surface of an aluminum current collector having a thickness of 15 µm according to a loading amount of 4.0 mAh/cm² and dried at 130 °C, and then placed between two roll-pressing rolls, and a gap between the roll-pressing rolls was adjusted at 25 °C to manufacture a positive electrode having a porosity of 26% and an energy density of 282 Wh/kg.

### <Examples: Manufacturing of secondary battery>

### Example 1.

A negative electrode active material (a mixture in which natural graphite and artificial graphite were mixed at a weight ratio of 70:30), an SBR binder (M37, LG Chem.), and a conductive material (acetylene black) were mixed in water, which is a solvent, at a weight ratio of 96.0:3.0:1.0 to prepare a negative electrode slurry having a solid content of 60 wt%. The negative electrode slurry was applied on a copper thin film having a thickness of 8 µm, which is a negative electrode current collector, dried, and roll-pressed to manufacture a negative electrode.

A polyethylene-based separator having a thickness of 15 µm was interposed between the positive electrode manufactured in Manufacturing Example 1 above and the negative electrode described above to manufacture an electrode assembly, and then the electrode assembly was inserted into a pouch-type battery case, followed by injecting an electrolyte solution thereto to manufacture a secondary battery. At this time, as the electrolyte solution, a solution prepared by dissolving 1 M of LiPF₆in an organic solvent in which ethylene carbonate (EC) and ethylmethyl carbonate (EMC) were mixed at a volume ratio of 1:2 was used.

### Examples 2 to 6.

Secondary batteries of Examples 2 to 6 were manufactured by the same process as in Example 1, except that the positive electrodes manufactured in Manufacturing Examples 2 to 6 were respectively used instead of the positive electrode manufactured in Manufacturing Example 1.

### Comparative Example 1.

A secondary battery of Comparative Example 1 was manufactured by the same process as in Example 1, except that the positive electrode manufactured in Comparative Manufacturing Example 1 was used instead of the positive electrode manufactured in Manufacturing Example 1.

### <Experimental Examples: Output evaluation at SOC lower end>

The secondary batteries manufactured in Examples and Comparative Examples above were charged to SOC 30% with a constant current of 0.1 C at 25 °C, activated, and then degassed.

Thereafter, the secondary batteries were charged to 4.2 V under a 0.33 C constant current/constant voltage condition, discharged to SOC 35% under about a constant output condition of 250 W, and then discharged for 18 seconds under a constant output condition of about 900 W. Thereafter, while discharging the secondary batteries under a constant output condition of about 1,100 W, the time taken for the secondary batteries to reach 2.5 V, which is a lower limit voltage, was measured.

The above process was repeated equally for SOC states of 30%, 25%, and 20%, respectively to measure the time taken to reach the lower limit voltage, and the time measured for each SOC was set as landing time, and the results are illustrated in FIG. 1.

From the results of FIG. 1, it can be confirmed that the secondary battery of Comparative Example 1 which used a positive electrode having a loading amount of 4.0 mAh/cm² taked less than 10 seconds to reach the lower voltage (SOC 0%) when discharged at SOC 35% under the conditions of claim 1. This means that it is difficult to secure time required for a safe landing in an emergency situation when the secondary battery is applied to UAM because the time to maintain a high output in a low SOC section is very short.

On the other hand, it can be confirmed that the secondary batteries of Examples 1 to 6 which used a positive electrode having a loading amount satisfying the range of 2.5 mAh/cm² to 3.8 mAh/cm² taked 10 seconds or more to reach the lower voltage (SOC 0%) when discharged at SOC 35% under the conditions of claim 1, and thus, are suitable to be applied to UAM.

Meanwhile, it can be confirmed that compared to the positive electrode of Manufacturing Example 1 and the positive electrode of Comparative Manufacturing Example 1 which used a lithium composite transition metal oxide in the form of secondary particles alone in the preparation of a positive electrode material, the positive electrodes of Manufacturing Examples 2 to 6 which used lithium composite transition metal oxides in the form of single particles and pseudo-single particles exhibit a much higher energy density, specifically an energy density of 270 Wh/kg or greater, and satisfy the output condition of claim 1 when applied to a battery. Among them, it can be confirmed that Example 2 and Examples 4 to 6 which used a positive electrode having a loading amount satisfying the range of 3.3 mAh/cm² to 3.5 mAh/cm² exhibit an energy density of 280 Wh/kg or greater and satisfy the output condition of claim 1 when applied to a battery.

## Claims

1. A lithium secondary battery comprising:
a positive electrode including a positive electrode current collector and a positive electrode active material layer formed on at least one surface of the positive electrode current collector, and having a loading amount of 2.5 mAh/cm² to 3.8 mAh/cm²;
a negative electrode including a negative electrode current collector and a negative electrode active material layer formed on at least one surface of the negative electrode current collector; and
a separator interposed between the positive electrode and the negative electrode,
wherein the lithium secondary battery takes 10 seconds or more to reach SOC 0% when discharged for 15 seconds under a 900W constant output condition at SOC 35% and then discharged under a 1,000W constant output condition.

2. The lithium secondary battery of claim 1, wherein the positive electrode active material layer comprises a positive electrode active material with a bimodal particle size distribution composed of large particles and small particles having different D50s from each other, wherein the large particles and the small particles each independently include a lithium nickel-based oxide.

3. The lithium secondary battery of claim 2, wherein the large particles have a D50 of 8 µm to 18 µm.

4. The lithium secondary battery of claim 2, wherein the small particles have a D50 of 2 µm to 7 µm.

5. The lithium secondary battery of claim 2, wherein the small particle includes a lithium nickel-based oxide in the form of a single particle composed of one primary particle or in the form of a pseudo-single particle which is a secondary particle in which 30 or fewer primary particles are aggregated.

6. The lithium secondary battery of claim 1, wherein the positive electrode active material layer comprises a positive electrode active material with a monomodal particle size distribution, wherein the positive electrode active material with the monomodal particle size distribution includes a lithium nickel-based oxide in the form of a single particle composed of one primary particle or in the form of a pseudo-single particle which is a secondary particle in which 30 or fewer primary particles are aggregated.

7. The lithium secondary battery of claim 5 or claim 6, wherein the primary particles have an average particle diameter of 1 µm to 5 µm.

8. The lithium secondary battery of claim 2 or claim 6, wherein the lithium nickel-based oxide is represented by Formula 1 below:
[Formula 1] Li₁₊ₓ(NiₐCo_{b}Mn_{c}M_{d})O₂
wherein in Formula 1 above,
M is one or more selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
1+x, a, b, c, and d are each an atomic fraction of an independent element, wherein -0.2≤x≤0.2, 0.60≤a<1, 0<b<0.40, 0<c<0.40, 0≤d≤0.10, and a+b+c+d=1.

9. The lithium secondary battery of claim 1, wherein the positive electrode has an energy density of 250 Wh/kg or greater.

10. The lithium secondary battery of claim 1, wherein the positive electrode active material layer has a porosity of 20% to 32%.

11. The lithium secondary battery of claim 1, wherein the lithium secondary battery takes 10 seconds or more to reach SOC 0% when discharged for 18 seconds under a 900W constant output condition at SOC 35% and then discharged under a 1,100W constant output condition.

12. The lithium secondary battery of claim 1, wherein the lithium secondary battery is for urban air mobility.

13. Urban air mobility comprising the lithium secondary battery of claim 1.
